Europäisches Patentamt

European Patent Office

Office européen des brevets

(19)

(11) Publication number: **0 081 355**
**B1**

(12) **EUROPEAN PATENT SPECIFICATION**

(45) Date of publication of patent specification: **29.04.87**

(51) Int. Cl.⁴: **C 09 D 9/04**

(21) Application number: **82306451.4**

(22) Date of filing: **03.12.82**

(54) Method and use of a composition for cleaning and/or reclaiming printing screens.

(30) Priority: **07.12.81 US 327782**
**07.12.81 US 327783**

(43) Date of publication of application:
**15.06.83 Bulletin 83/24**

(45) Publication of the grant of the patent:
**29.04.87 Bulletin 87/18**

(84) Designated Contracting States:
**AT BE CH DE FR GB IT LI LU NL SE**

(56) References cited:
**US-A-3 673 099**
**US-A-3 706 691**

(73) Proprietor: **INTERCONTINENTAL CHEMICAL CORPORATION**
**4660 Spring Grove Avenue**
**Cincinnati Ohio (US)**

(72) Inventor: **Cord, Albert B.**
**11790 Snider Road**
**Cincinnati Ohio (US)**
Inventor: **Valasek, Gary M.**
**6934 Lois Drive**
**Cincinnati Ohio (US)**

(74) Representative: **Allen, Oliver John Richard et al**
**Lloyd Wise, Tregear & Co. Norman House**
**105-109 Strand**
**London, WC2R 0AE (GB)**

EP 0 081 355 B1

Courier Press, Leamington Spa, England.

## Description

This invention relates to screen printing. Screen printing is a well established and substantial industry. Essentially, printing screens are imparted with various designs, art work or printed indicia by rather permanent emulsions on the screen for localised application of dye pastes or inks used in reproducing the image from the screen.

The emulsions surrounding the image areas of the printed screens are resistant to inks so that they resist removal during the printing process when ink is applied through the screen for reproduction of the images therefrom. The same qualities which make emulsions resistant to ink and cleaning solvents can make them more difficult to be removed from a printed screen.

Printing screens are usually made from silk, synthetic fabric or metal materials and, in the practice of screen printing, it is common to reuse them. This involves a cleaning process whereby ink residue from one printing operation will be removed and cleaned from the screens which permits their storage and later reuse.

In the removal of ink, it is sometimes important not to affect the emulsion area which has been imparted to the screen. Modern day screen printing has evolved rather complex ink or dye formulations which are sometimes very difficult to remove. Agents which may be suitable to clean inks from the screens may also affect the underlying emulsion. Therefore, screen printing involves a balanced variety of chemical processes in which screens are prepared from artwork with semi- to fully-permanent emulsions for reproducing ink images in a manner such that the emulsion areas resist ink attack.

In such operations, the screen is repeatedly cleaned for filing and/or subsequent reuse. It is also important that the screen be capable of reclamation when ink image and/or emulsion areas are removed with different types of screen reclaiming solutions or agents.

Commercial screen printing establishments usually clean or reclaim many screens daily and, for this purpose, employ screen cleaning machines or reclaiming systems. Such cleaning machines or reclaiming systems usually employ recirculating solvents which allow the synthetic or metal screens to be introduced and either cleaned or reclaimed, depending upon production requirements. In addition, other commercial operations involve hand-cleaning or reclaiming with various solvents or corrosive agents. During the course of cleaning or reclaiming, the screen printer is often in intimate contact with the chemicals or solvents.

There are many solvents or agents used in screen cleaning and reclamation. The three most commonly used agents may be classified as aliphatic hydrocarbons, aromatic hydrocarbons and oxygenated solvents, and less frequently, chlorinated solvents. Aliphatic hydrocarbons are commonly referred to as "mineral spirits" but more accurately these aliphatic solvents are composed of mixtures of straight-chain and/or branched-chain saturated hydrocarbons. The higher the molecular weight or the number of carbon atoms, the higher the boiling point of the solvent. The higher the boiling point, the slower the solvent will evaporate, hence, usually the higher boiling aliphatic hydrocarbons are desirable for use in screen cleaning. The aromatic hydrocarbon solvents include cyclic hydrocarbons containing the benzene ring. These aromatic hydrocarbons are usually more flammable but much stronger in solvation power than the aliphatic type solvents and, similarly, the higher the molecular weight for the aromatic hydrocarbon, the higher the boiling range. In contrast to the rather non-polar hydrocarbons, oxygenated solvents are more polar compounds. Typically, oxygenated solvents are those having hydroxyl or carbonyl groups, and many of them have considerable solubility in water. Other solvents include chlorinated solvents which are fully- or semi-chlorinated hydrocarbons and the rarely used fluorinated hydrocarbons of the Freon types.

Use of the above solvents has been found to be often potentially hazardous to the health and safety of the printers or workers exposed thereto. Particular hazards are prolonged or repeated solvent contact with the skin, use of flammable solvents and hot reclamation systems which create hazards and pollution no longer tolerable.

In accordance with one aspect of the invention, a method of cleaning and/or reclaiming a printing screen having a residue of ink on the surface thereof which comprises the steps of treating at substantially ambient or room temperature the printing screen ink residue with a non-aqueous liquid composition consisting essentially of N-methyl-2-pyrrolidone, an oxygenated solvent and a surfactant, allowing the composition to dwell on the ink surface for a sufficient period of time to degrade the ink residue and then rinsing the degraded ink residue from the screen.

Preferably, the residue is treated by spraying the concentrate of NMP, oxygenated solvent and surfactant system (herein sometimes simply "NMP concentrate") onto a screen surface for a sufficient dwell time to enable solubilization or degradation of the ink. Then, the ink may be rinsed with water to remove it from the screen.

By this method, the ink is degraded to a point whereby a medium to high pressure, low-volume water spray will permit the complete removal of ink. Spraying a coherent spray of the NMP concentrate enables extremely low amounts to be used and degradation may still surprisingly be achieved. It has also been found that, after the ink cleaning step with the NMP concentrate, the printed emulsion is in a sensitized state for removal from the screen with a periodate-containing emulsion remover. The screen may thus be totally reclaimed. Thereafter, if further desired, any image ink residue or "ghost" as the term is used in the trade, may be removed with a caustic solution containing oxygenated solvents. The above sequence provides for an overall screen cleaning and reclamation process.

An aqueous mixture including benzyltrimethylammonium hydroxide, N-methyl-2-pyrrolidone, methanol and a surfactant is known per se in US—A—3706691. The mixture is used to dissolve deteriorated encapsulating (potting) compositions.

In accordance with another aspect of the invention, a composition which comprises a non-aqueous mixture of N-methyl-2-pyrrolidone, an oxygenated solvent, and a surfactant, is used as a cleaning and/or reclaiming composition for removing ink(s) from a printing screen.

A non-aqueous system of these essential components will solubilize and degrade a wide variety of polymeric or other inks currently being employed in the modern screen printing industry. The composition has been found to penetrate, emulsify and prevent redeposition of inks during their removal from a variety of common printing screens. It has also been discovered that the NMP, oxygenated solvent and surfactant composition must be non-aqueous in order to effectively clean screens or to sensitize the cleaned printed screen for subsequent emulsion removal, if desired.

This invention is directed to printing screen cleaning or reclaiming methods and use of compositions in such methods which are generally effective in solvating or degrading inks used in the printing industry. The method functions with ink cleaning compositions which not only solubilize or degrade broad classes of printing inks, but also possess high or no flags points, excellent biodegradabilities whereby preventing pollution and hazards which are not tolerable, and high threshold limit valued (TLV) which means that the amount of airborne matter provided offers greater safety in breathing. Thus, the health and safety of the screen printer or worker in the industry is enhanced by this method. In addition, this invention provides for methods of cleaning and reclaiming printing screens which are synergistically operative whereby inks can be removed and the printed emulsion on the screen may be sensitized for effective removal.

In addition, in another of its general aspects, the method of the invention involves cleaning or cleaning and reclaiming, printing screens made of silk, textile, metal or other types, without damaging the screen and to place it in an immediate condition for either storage or reuse.

As mentioned, hot solvent and alkaline techniques have been employed in the prior art screen cleaning and reclamation. This invention avoids the need for such hot cleaning techniques and the associated health hazards created by such techniques, since the invention is performed at ambient or room temperature conditions. In this essential respect, it is considered highly unexpected and unobvious that a cleaning and reclamation process could operate at such low or ambient temperatures and be as effective in removing a wide variety of ink compositions. Furthermore, whereas it has been disclosed in prior patents to employ derivatives of pyrrolidone including alkyl pyrrolidones, in cleaning compositions, it has not heretofore been suggested that any such pyrrolidone derivative may be employed in a composition or method for the removal of screen printing ink compositions. Furthermore, even where pyrrolidones have been suggested in non-analogous arts, they are employed in aqueous systems in contrast to the essentially non-aqueous concentrates of this invention. Also, for purposes of this invention, N-methyl-2-pyrrolidone is essentially required to operate in combination with oxygenated solvents and surfactants in order to achieve the most optimum desired results. In substance, in the screen printing industry, it has not been heretofore suggested that a non-toxic, biodegradable and very safe cleaning composition may be provided, and still achieve highly desirable cleaning and synergistic reclamation effects, as has been provided by the methods and compositions of this invention.

Preferably, the oxygenated solvent is a combination of butyl cellosolve and cyclohexanone. These preferred oxygenated solvents are from the class of glycol ethers, alcohols and ketones, respectively. Other classes of applicable oxygenated solvents include esters and ethers, and mixed classes thereof. The surfactant is preferably from the group consisting of nonionic or anionic surfactants, or mixtures thereof, and a specific example of nonionic surfactant is octyl phenoxy (polyethoxy) ethanol of Rohm & Haas, sold under the trademark Triton X-114 and an organic phosphate ester sold under the trademark Gafac RP-710 by General Analine and Film Corporation. Further examples of oxygenated solvents from the class of glycol ethers which may be used include methyl cellosolve, hexyl cellosolve, cellosolve solvent, methyl carbitol, carbitol solvent, butyl carbitol, hexyl carbitol, and the like. Other examples of ketones include methyl ethyl ketone, methyl isobutyl ketone, methyl isoamyl ketone, ethyl butyl ketone, isobutyl heptyl ketone, isophorone, diacetone alcohol, acetone, 4-methoxy-4-methyl-2-pentanone, and the like. Other examples of ethers include butyrolactone, diethyl carbitol and dibutyl carbitol, and others. Examples of esters include butyl lactate, butyl acetate, butyl carbitol acetate, carbitol acetate, butyl cellosolve acetate, cellosolve acetate, 2-ethyl hexyl acetate, amyl acetate, methyl cellosolve acetate, formates, and others. Examples of alcohols include amyl alcohol, butyl alcohol, fufurol alcohol, 2-butyne-1,4,diol,tetrahydrofurfurol alcohol, and others. Suitably, oxygenated solvents from the above mentioned classes are use, depending upon the required solvating capacities of the oxygenated solvents, in order to obtain the most desired biodegradability, least flammability and highest threshold limit values to meet or exceed health and safety standards. The oxygenated solvent facilitates the low viscosity solvating character of the NMP and helps disperse it to solubilize or degrade the ink compositions. The NMP is also water active when needed. Thus, the combination of the NMP and the oxygenated solvent provide a coaction between organic co-solvents along with a unique water activity to provide a synergistic action in solvating or degrading of ink compositions on screens for removal with water. Yet, it is imperative that the NMP concentrates be

3

essentially non-aqueous during solvation or degradation of ink because any significant water will destroy the effectiveness of NMP in its cleaning power as it is used in this invention. However, the solvated or degraded ink must then be in a state for removal with a low-volume, pressurized stream of water.

In addition, to the surfactants mentioned above, other nonionic, anionic, cationic and amphoteric surfactants may be used, as listed primarily in *McCutcheon's Detergents and Emulsifiers*, 1980 Edition, MC Publishing Company, Glenrock, New Jersey. The surfactants aid in the dispersion and degradation of the inks for aqueous removal. Surfactants of the anionic type may be (1) of the group of saponified fatty acids or soaps, or (2) of saponified petroleum oil such as sodium salts or organic sulfonates or sulfates or (3) of saponified esters, alcohols or glycols, with the latter being well known as anionic synthetic surfactants. Examples of these anionic surfactants include the alkaryl sulfonates or amine salts thereof such as sulfonates of dodecyl benzene or diethanolamine salt of dodecyl benzene sulfonic acid. Most of these sulfonates contain many chemical species. The class name given to most of them is "alkylaryl sulfonate". Simply, this means that a paraffinic hydrocarbon is bonded to an aromatic or benzene nucleus and the aromatic portion has been sulfonated. Examples of saponified fatty acids ($C_6$—$C_{24}$) are the sodium or potassium salts of myristic, palmitic, stearic, oleic or linoleic acids or mixtures thereof. Also in this class of anionic surfactants are organic phosphate esters including alkali and alkaline earth metal salts of neutral phosphoric acid esters of oxylalkylated higher alkyl phenols or aliphatic monohydric alcohols. "Aerosol OT" is a dioctyl alkali metal sulfosuccinate anionic surfactant made by Cyanamide. The nonionic surfactants suitable for use commonly have hydrophylic portions or side chains usually of the polyoxyalkylene type. The oil soluble or dispersible part of the molecule is derived from either fatty acids, alcohols, amides or amines. By suitable choice of starting materials and regulation of the length of the polyoxyalkylene chain, the surfactant parts of the nonionic detergents may be varied as is well known. Suitable examples of nonionic surfactants include alkylphenoxy polyoxyethylene glycol, for example, ethylene oxide adduct of either octyl-, nonyl- or tridecyl- phenol and the like. These mentioned nonionic surfactants are usually prepared by the reaction of the alkyl phenol with ethylene oxide. Commercial products are sold under the trademarks "Triton X-100 or X-114" by Rohm and Haas Co. or "Tergitol" by Union Carbide and Carbon Corp. which are alkyl phenyl ethers of polyethylene glycol. Other specific examples of nonionic surfactants include glyceryl monooleate, oleyl monoisopropanolamide sorbitol dioleate, alkylol amides prepared by reacting alkanolamides such as monoisopropanolamine, diethanolamine, or monobutanolamine with fatty acids such as oleic, pelargonic, lauric and the like. The cationic surfactants are also well developed and mainly include betaines and quaternary ammonium compounds. Some specific examples of betaines include imidazoline betaines, aliphatic and carboxycyclic betaines, and betaines with hetero atoms in the hydrophobic chains such as dodecyloxypropyldimethyl aminoacetic acid. Typical of the quaternary ammonium compounds that may be mentioned are dimethyl dicoco ammonium chloride, cetyl pyridinium acetate, methyl cetyl piperidinium propionate, N,N dilauryl, N,N dimethyl ammonium diethophosphate, and the like. Thus, it will be understood that other anionic, cationic, amphoteric or nonionic surfactants may be employed in accordance with the principles of this invention.

The amounts of ingredients vary over wide ranges, however, it is preferred to use a significant amount of the N-methyl-2-pyrrolidone, i.e., about 30—85% by weight. The oxygenated solvent is usually contained in amount of about 15—35% by weight. The remainder of the composition comprises a surfactant or a mixture of surfactants within the range of about 1 to about 5% by weight. The NMP concentrates may also be supplemented with other organic solvents such as methylene chloride, trichloroethane, dimethyl sulfoxide and its derivatives, fluorocarbons, and freons in amounts of about 10—30% by weight where additional faster penetrating power may be desired for better ink solubilization. Such organic solvents are permitted which would not alter the essential characteristics of the ink cleaning compositions of this invention and may help to enhance activity of the co-solvents in penetrating, emulsifying and accelerating the degradation of the inks for subsequent removal.

In order to further illustrate the invention, reference is made to the specific operating formulas detailed hereinafter and detailed methods of cleaning and reclaiming a printing screen.

Example 1
75.72% N-methyl-2-pyrrolidone
18.52% Butyl Cellosolve
3.04% Cyclohexanone
2.62% Octyl Phenoxy (Polyethoxy) Ethanol (Triton X-114)
0.10% Organic Phosphate Ester (Gafac RP-710)

Example 2
37.86% N-methyl-2-pyrrolidone
9.26% Butyl Cellosolve
1.52% Cyclohexanone
24.00% Cellosolve Acetate
26.00% Methylene Chloride
1.31% Octyl Phenoxy (Polyethoxy) Ethanol (Triton X114)
0.05% Organic Phosphate Ester (Gafac RP-710)

In the alternative to the specific ingredients of Example 2, 50% of Example 1 may be combined with 26% of methylene chloride and 24% cellosolve acetate. Examples 1 and 2 are preferred formulas for the NMP cleaning concentrates because of their biodegradability, reduced flammability and low TLV values.

Before describing in detail the cleaning and reclaiming of printing screens employing the compositions of this invention and the methods in which they are employed, an understanding of certain underlying facts or terms is important. First of all, the ink side of the printing screen is alternately called the squeegee side, the well side, or the front side, but for purposes of this description it will be called the ink side. The opposite side of the screen is called the back side, down side or print-contact side. Again, for purposes of this description, it will be called the print-contact side. The term "ink" will be the generic term for many of the compositions that are employed in the practice of screen printing including dyes or inks commonly referred to as flexible enamels, synthetic enamels, fast-dry enamels, flexible lacquers, industrial lacquers, flat vinyl ink, vinyl half-tone ink, fluorescent vinyl ink, gloss vinyl ink, satin vinyl ink, flock adhesive, transparent ink, metallic powders, acrylic ink, plastisol ink, mylar ink, textile ink, among many other types of inks. For general information on ink compositions, reference may be had to the catalog by KC Graphics, Inc. 1978—1979, copyright 1978 by KC Graphics Inc. Reference may also be had to "Textile Screen Printing" by Albert Kosloff, Second Edition, International Standard Book Number 0-911380-39-6 (1976). These sources will also serve as background information for the inks which may be cleaned with the inventive cleaning compositions. As developed above, the printing screen may be made from a number of materials and may have various mesh sizes. A monofilament screen is a single strand of material for example of polyester, nylon, stainless steel, silk, chrome-plated wire, or other things, which is woven into a specific number of squares per a dimension, i.e., a 230 mesh means 230 open squares per square inch. A multi-filament screen is comprised of a series of strands of similar materials just mentioned, braided before weaving into the mesh measurement, i.e., 12×150 mesh would mean 12 interwoven strands subsequently woven into 150 open squares per square inch and, where the cross-over points of mesh occur, pigment can get into the strands and may become extremely hard to remove. Thus, it may be determined by this description of either the mono-filament or the multi-filament screens that the requirements for complete removal of ink residue, for instance, may differ due to the construction of the screen. In particular, that last residue often referred to in the art as "ghost" or "haze" would be more readily apparent in the multi-filament screens where pigment can get into the strands and becomes very hard to remove. There are a number of classes of emulsions which initially cover the print-contact side of the screen. For instance, a direct emulsion is a water-reducible substance which cures to a temporary, non-removable substance when exposed to specific wavelengths of light. For instance, the art work can be placed over the fresh emulsion while it is still reactive to water and exposed to halide light, at which time the part of the emulsion not exposed to the light, because it is covered with the art, stays water-reactive. After a certain shooting or light exposure time, the art is removed, the screen is then flushed with water and the part that has not been exposed to the light is flushed out, leaving the emulsion-void image area through which the ink flows through the screen for printing. The measure of difficulty of emulsion removal also relates to the number of coats which are put on the mesh, that is, dried and reapplied, and so forth, until you have between, for instance, 2 to about 5 coats of emulsion. Thus, the degree of difficulty in removing emulsion depends upon a number of factors including the number of coats, whether it is strongly sensitized, the exposure time, type of light activation and chemical hardeners used after emulsion development, among other factors.

In view of the above background, the cleaning composition of Example 1 is a liquid non-aqueous solvent concentrate having a flash point of approximately 200°F (95°C) and it is designed to remove a large variety of inks and paints from screens. In another feature of the invention, NMP concentrate of Example 1 prepares or sensitizes many common emulsions for subsequent removal with a low-volume, high pressure water rinsing. It is fast, efficient, economical by its capability of low-volume usage, biodegradable and does not carry the red label (DOT flammable) solvent designation. It is also safe on all screens and can be left on screens for extended periods prior to rinsing for cleaning. The composition of Example 1 may be employed in a recirculating solvent system or in other portable systems. In the case of a recirculating solvent system, Example 1 concentrate is allowed to flow on the ink side of an inclined screen, whereupon it may be drained for approximately 5 minutes. Alternatively, the ink side of the screen may be sprayed in a light even pattern with a cohesive spray to prevent volatilization, followed by a dwell time of about 2—5 minutes. A pressurized unit is operated for example under about 30 to 100 psi (normally 40 psi) to provide a coherent stream of concentrate from a nozzle about 6" to 12" away from the screen. Mists are avoided. In the case of either a recirculating solvent or spray treatment, the degraded inks are then easily removed by a light to high pressure, i.e., approximately 50 to 1000 psi, low-volume water rinse. Low-volume means 2—4 gallons per minute. A fan spray has been found preferred to provide a balance of force and quantity. A suitable fan spray nozzle is the UniJet 65/01 manufactured by Spraying Systems Company of Wheaton , Illinois. It is important, as developed above, that the screens on which the ink will be solubilized or degraded are free from water prior to cleaning. The presence of water either in the NMP concentrate or on the screen greatly destroys the effectiveness of the composition.

It has been found that the most preferred cleaning technique for achieving the advantages of the invention is the method whereby the cleaning concentrate is sprayed onto the ink side of the screen in a light even pattern and allowed to dwell for a short period of time, i.e., several minutes up to several hours, depending upon the factors involved in the cleaning system, composition of the inks, production timing, and so forth. During the dwell time, the liquid cleaning concentrate penetrates, emulsifies and solubilizes the ink. The ink stays on the screen, but its former ink character is destroyed. During the dwell time, the co-solvent actions of N-methyl-2-pyrrolidone and the oxygenated solvent are at work. Furthermore, the surfactant is penetrating the ink composition for dispersion and to aid in later ink removal by water. The coaction of all three ingredients permits the solubilization or degradation of the ink permitting it to be dispersed easily for removal. The N-methyl-2-pyrrolidone provides water activity to the composition for removal with water, however, water must be under pressurized conditions such that the ink composition may be blown out, i.e., blown away from the screen. Thus, the composition is a delicate balance of ingredients whereby organic components of the ink may be solubilized or degraded by both the N-methyl-2-pyrrolidone and oxygenated solvents. Furthermore, even though water during the presence of the solubilization and degradation of the ink would be detrimental to the activity of N-methyl-2-pyrrolidone, nevertheless, the degraded ink in the presence of the NMP and cosolvent is water-active and may be removed from the screen with a pressurized fan of low-volume water rinse. In this connection it is preferred to employ a slicing fan or stream of water and sweeping it across the screen from the bottom upwards in a manner such that the ink may be removed without redeposition.

The composition of Example 2 above is employed in the same manner for cleaning as the liquid solvent concentrate of Example 1. However, the presence of methylene chloride tends to enhance the penetration of the entire composition and cellosolve acetate enhances the water solubility of the composition. Other organic solvents which may be substituted for the methylene chloride include other chlorinated solvents like 1,1,1-trichloroethane, dimethyl sulfoxide or derivatives such as trichlorodifluoroethane dimethylsulfoxide, chloroform and fluorocarbons such as trichlorotrifluoroethane or Freons, or mixtures thereof.

In either case, the addition of such an organic solvent which enhances penetration, may also tend to evaporate and, therefore, has a much shorter wet life or dwell time on the screen. For instance, whereas the composition of Claim 1 may be left on the screen surface for a number of hours, the composition of Example 2 is usually employed for several minutes, i.e., between 2—5 minutes for example. It is to be further understood that the ink solubilizer of Example 1 may be sequentially used in combination with the cleaning concentrate of Example 2. For instance, during the course of a cleaning operation, the ink may be solubilized with the Example 1 concentrate where an operation may require screens to be left from production for a period of time up to several hours prior to the rinse removal of the ink. In such a case, the dwell time may be followed by a fresh degrading concentrate of Example 2 so that the residue may be activated for subsequent removal with a low-volume, high pressure water rinse. Furthermore, the amounts of the materials sprayed onto the substrate vary but normally they are within the range of several ounces per several square feet, for example, 2—4 ounces per 6 foot square of screen.

Thus, in a preferred aspect, the method of this invention involves spraying of the concentrates of either of the Examples 1—2 onto a screen. The spray is an economical and low volume usage followed by dwell time to solubilize and/or degrade the ink. Thereafter, a low-volume, high pressure water stream is directed at the substrate, preferably a fan-spray is employed to slice through and help remove the destroyed ink composition. If the solubilized and degraded screen were simply dipped in water, the inks would set up and the screen would not be effectively cleaned. There is a balance between the force and the quantity of the water which is employed which will be understood by the person of ordinary skill in the art in view of this description.

It has been observed in connection with the method of cleaning the screens with a low area coverage spray, that a light mist may tend to settle on other remaining areas of degraded inks. It has been found that this problem can be alleviated or overcome by the addition of another component into the concentrate. That component may be characterized as a hydrophobic additive and in particular it has been found that synthetic water soluble oils sold under the trademark Ucon are satisfactory. Depending upon the amount of water mist or back-lash that is to be expected from the water rinse out, part of the surfactant package or liquid NMP concentrate may contain a water dispersible oil which functions initially as a water repellant to a light water spray or mist, but readily allows a low volume, pressurized stream of water to remove the ink compositions previously degraded and solubilized by the NMP concentrate. Such water soluble oils are of the class of polyalkylene glycols, commonly known as Ucon lubricants manufactured by Union Carbide Corporation, but other types and mixtures thereof could be used of differing water solubility. A preferred high molecular weight one is Ucon 50-HB5100. Specific compounds include polyalkylene glycols, i.e., an oxirane polymer, CAS Registration No. 9038-95-3 or ethoxylated lanolin or ethoxylated castor oil. However, it is preferred that the oils of the types described herein do not leave a residue on the screen after an adequate water rinse.

When the printing screen is to be totally reclaimed, that is, cleaned and the emulsion removed completely, the process is as follows. When the process of printing is completed, the operator cards or squeegees off any residual ink that is on the ink side of the screen, as well as any ink from the print-contact side. From a very practical standpoint, inks are expensive and an attempt is made to return as much of the ink as possible. From a standpoint of cleaning, more excess ink requires more cleaning concentrate in order to remove the ink and reclaim the screen without haze or ghost residue. After the screen is well carded, either before or after removal from the press, and the cleaning process begins. If the process is to be an immediate reclaim, either the concentrate of Example 1 or 2 may be used, generally speaking, depending on ink type. Either concentrate is sprayed on the ink side of the screen and then moved to the reclaim area. In the process of immediate reclaiming, within about 5—10 minutes after the application of either of the compositions of Exaples 1 or 2, immediate relcaiming should be commenced. After spraying with either concentrate, the image is flushed out from the print-contact side of the screen with high pressure water, as developed above, and this clears all or practically all of the ink. At the same time, the entire surface of the emulsion is wetted with water to prepare it for the application of a periodate-containing emulsion remover. It has been found that there is a synergistic action resulting from use of the non-aqueous concentrate of Example 1 or 2 whose residue remains even after the water spray such that the emulsion is sensitized for faster removal. It is theorized, however, that in the immediate reclaim process, the emulsion is somehow softened or made more permable for the treatment with a periodate-containing emulsion remover. A suitable example of an emulsion remover is exemplified by Example 3.

Example 3
94.096% Water
2.880% Sodium Meta Periodate
3.000% Monosodium Phosphate, Anhydrous
110 grams/1000 pounds water of an Anionic Surfactant Package of Equal Amounts of Gafac RP-710, identified above and Calsoft F-90 (sodium dodecylbenzene sulfonate)

The above periodate containing remover is then sprayed onto the screen surface on the print side and is permitted to dwell there anywhere from about 15 seconds to several minutes. This is generally an adequate time for degradation of the emulsion. Again a high pressure spray is employed to clean the emulsion from the screen. As developed above, it is important that residual effect of the concentrate of Examples 1 or 2 after the water spray be utilized immediately by following with an application of the periodate-containing emulsion remover. It has been proven that when more time elapses, for instance one-half hour, the emulsion will be taken off with greater difficulty. Accordingly, there is a synergism between the residual effect of the cleaning compositions of this invention insofar as they coact with such periodate containing emulsion removers and provide the complete removal of the emulsion.

Finally, in the event that there is a residual ghost image as explained above, especially in connection with a multi-filament screen, a ghost or image remover may be employed. It is to be noted, however, that although there are at some time residual images, they are not necessarily a hindrance to further use of the screen and some screen printers are not particular where there is a tinge of residue as long as the mesh squares themselves are not blocked in the screen. If a ghost or haze remover is used, it is typically a caustic solution of oxygenated solvents to which methylene chloride is also added. The reason for such usage is that they are water rinsable or soluble and leave no residue to cause emulsion problems later. In the case of the ghost or haze removers of this type it is necessary to brush, roll or card them on as opposed to spraying because of the enhanced viscosity. A typical composition is as follows:

31.64% Cyclohexanone
19.40% Cellosolve Acetate
38.83% Sodium Hydroxide 50%
9.61% Dowfax 2A1 Solution (sodium Didodecylphenoxy-benzenedisulfonate 70%, sodium dodecylphenoxy-benzene-disulfonate 30%)
0.01% Brilliant Milling Red Dye
0.51% Gafac RP-710 (identified above)

For screens which will be delayed in processing but which will be totally reclaimed, it is important to destroy the ink so that at some time thereafter, that is in a matter of hours, the screen may be treated. For instance, the composition of Example 1 is sprayed onto the ink side and, again, this is a cohesive spray of the type referred to above without mist so as to reduce volatilization. The screen is thus wet and the ink tends to stay wet for a period of time. However, if there is a lapse of time before it goes to the screen shop for complete removal of the emulsion, there will be some tendency for drying and possibly some run-down on the print side of the screen. If this develops, then the print side of the screen may be resprayed with a composition of Example 2 which acts to freshen up the solubilized residue after treatment with the composition of Example 1 to degrade the ink upon or prior to being contacted with the water spray. At this point, upon respraying the print-contact side of the screen with a concentrate of Example 2 and rinsing, the emulsion is sensitized or conditioned for the subsequent action with the emulsion cleaner as mentioned above. Again, if a ghost or haze occurs, the ghost remover may be employed as set forth above.

One aspect of the cleaning and reclaiming procedures is that no further screen degreasing is required as is required when products typically available in the prior art have been used on screens to remove the inks and emulsions. In the past, toluene, acetone, bleach, trisodium phosphate, and other solvents or cleaning agents of the type indicated in the background of this invention have been employed in order to eliminate screen oily residue at the end of processing. Accordingly, this invention offers a highly advantageous system for the complete cleaning of inks and emulsions from printing screens in a manner heretofore unachieved.

## Claims

1. A method of cleaning and/or reclaiming a printing screen having a residue of ink on the surface thereof which comprises the steps of treating at substantially ambient or room temperature the printing screen ink residue with a non-aqueous liquid composition comprising N-methyl-2-pyrrolidone, an oxygenated solvent and surfactant, allowing the composition to dwell on the ink surface for a sufficient period of time to degrade the ink residue and then rinsing the degraded ink residue from the screen.

2. A method as claimed in Claim 1 wherein subsequent to rinsing, the screen is contacted within a short time by a periodate-containing emulsion remover, the resultant screen then being flushed with a stream of water to remove the emulsion image.

3. A method as claimed in either Claim 1 or 2 wherein the printing screen has a printed image and a residue of ink on the surface thereof, the degraded ink residue being removed by rinsing with a pressurized stream of water without removing the printed image.

4. A method as claimed in any preceding claim wherein the printing screen ink residue is treated by spraying the liquid composition thereon.

5. A method as claimed in any preceding claim wherein the rinse is water applied as a fan spray or as a pressurized low-volume water rinse.

6. A method as claimed in any preceding claim wherein the oxygenated solvent is either butyl cellosolve, cellosolve acetate, cyclohexanone, or mixtures thereof.

7. A method as claimed in any preceding claim wherein after several hours dwell time the degraded ink is treated with a liquid concentrate of N-methyl-2-pyrrolidone, an oxygenated solvent, methylene chloride and a surfactant prior to rinsing.

8. A method as claimed in any preceding claim wherein the surfactant is either a nonionic, anionic or amphoteric surfactant, or mixture thereof.

9. A method as claimed in any preceding claim wherein the liquid composition comprises at least a non-aqueous mixture by weight of about 30 to about 85% N-methyl-2-pyrrolidone, about 10 to 35% of oxygenated solvent and, about 1 to 5% of surfactant.

10. A method as claimed in any preceding claim wherein the liquid composition includes a water dispersible oil.

11. A method as claimed in Claim 10 wherein the water dispersible oil is either polyalkylene glycol, ethoxylated lanolin or ethoxylated castor oil.

12. A method as claimed in any one of Claims 2 to 11 wherein the periodate-containing emulsion remover is an aqueous solution of sodium metaperiodate.

13. A method as claimed in any one of Claims 2 to 12 wherein the periodate-containing emulsion remover additionally contains an anionic surfactant.

14. A method as claimed in any one of Claims 2 to 13 wherein after the last water flush a caustic solution of oxygenated solvent is applied to the screen to remove ghost images.

15. A method as claimed in Claim 14 wherein the caustic solution of oxygenated solvent comprises a solution of sodium hydroxide, an oxygenated solvent being either cyclohexanone or cellosolve acetate or mixtures thereof, and a surfactant.

16. A method as claimed in Claim 15 wherein methylene chloride is added to the caustic solution.

17. A method as claimed in any one of Claim 2 to 16 wherein, after the dwell time and prior to the first water rinse, a composition is sprayed onto the resultant screen residue comprising N-methyl-2-pyrrolidone, an oxygenated solvent, a surfactant, and an organic solvent being either methylene chloride, 1,1,1-trichlorethane, trichlorodifluoroethane dimethylsulfoxide or chloroform or mixtures thereof.

18. The use of a composition comprising a non-aqueous mixture of N-methyl-2-pyrrolidone, an oxygenated solvent, and a surfactant, as a cleaning and/or reclaiming composition for removing ink(s) from a printing screen.

19. The use as claimed in Claim 18 wherein the oxygenated solvent is either butyl cellosolve, cellosolve acetate or cyclohexanone, or mixtures thereof.

20. The use as claimed in either Claim 18 or Claim 19 wherein the surfactant is either a nonionic, anionic or amphoteric surfactant, or mixture thereof.

21. The use as claimed in any one of Claims 18 to 20 including an organic solvent being either methylene chloride, 1,1,1-trichloroethane, dimethylsulfoxide, or trichlorotrifluoroethane, or mixtures thereof.

22. The use as claimed in any one of Claims 18 to 21 wherein the non-aqueous mixture comprises by weight about 30 to 85% N-methyl-2-pyrrolidone, about 10 to 35% oxygenated solvent and about 1 to 5% surfactant.

23. The use as claimed in any one of Claims 18 to 22 which includes a water dispersible oil.

24. The use as claimed in Claim 23 wherein the water dispersible oil is either polyalkylene glycol, ethoxylated lanolin or ethoxylated castor oil.

## Patentansprüche

1. Verfahren zur Reinigung und/oder Rückgewinnung eines Drucksiebs mit einem Farbrückstand auf

8

# 0 081 355

dessen Oberfläche, gekennzeichnet, durch die Stufen, dass man im wesentlichen bei Umgebungs- oder Raumtemperatur den Siebdruckfarbrückstand mit einer nichtwässrigen flüssigen, N-Methyl-2-pyrrolidon, ein sauerstoffhaltiges Lösungsmittel und ein Tensid enthaltenden Zusammensetzung behandelt, die Zusammensetzung genügend lange auf die Farbfläche einwirken lässt, um den Farbrückstand abzubauen, und dann den abgebauten Farbrückstand von dem Sieb abwäscht.

2. Verfahren nach Anspruch 1, worin nach dem Waschen das Sieb kurze Zeit mit einem perjodathaltigen Entschichter in Berührung gebracht und das dabei erhaltene Sieb dann zur Entfernung des Druckbilds mit einem Wasserstrahl gespült wird.

3. Verfahren nach Anspruch 1 oder 2, worin das Drucksieb ein Druckbild und einen Farbrückstand auf dessen Oberfläche aufweist, wobei der abgebaute Farbrückstand ohne Entfernung des Schichtbilds durch Abwaschen mit einem Druckwasserstrahl entfernt wird.

4. Verfahren nach einem der vorhergehenden Ansprüche, worin der Farbrückstand auf dem Drucksieb durch Besprühen mit der flüssigen Zusammensetzung behandelt wird.

5. Verfahren nach einem der vorhergehenden Ansprüche, worin das Waschwasser als Sprühfächer oder als ein kleines Volumen Druckwaschwasser aufgebracht wird.

6. Verfahren nach einem der vorhergehenden Ansprüche, worin als sauerstoffhaltiges Lösungsmittel entweder Butylcellosolve, Cellosolveacetate, Cyklohexanon oder deren Gemische vorliegen.

7. Verfahren nach einem der vorhergehenden Ansprüche, worin die abgebaute Farbe nach einer Wartezeit von mehreren Stunden vor dem Abwachsen mit einem flüssigen Konzentrat von N-Methyl-2-pyrrolidon, einem sauerstoffhaltigen Lösungsmittel, Methylenchlorid und einem Tensid behandelt wird.

8. Verfahren nach einem der vorhergehenden Ansprüche, worin als Tensid entweder ein nicht-ionogenes ein anionenaktives oder amphoteres Tensid oder deren Gemisch vorliegt.

9. Verfahren nach einem der vorhergehenden Ansprüche, worin die flüssige Zusammensetzung aus mindestens einem nichtwässrigen Gemisch von etwa 30 bis etwa 85 Gew.-% N-Methyl-2-pyrrolidon, etwa 10 bis 35 Gew.-% sauerstoffhaltigem Lösungsmittel und etwa 1 bis 5 Gew.-% Tensid besteht.

10. Verfahren nach einem der vorhergehenden Ansprüche, worin die flüssige Zusammensetzung ferner ein in Wasser dispergierbares Öl enthält.

11. Verfahren nach Anspruch 10, worin als in Wasser dispergierbares Öl entweder Polyalkylenglycol, äthoxyliertes Lanolin oder äthoxyliertes Rizinusöl vorliegt.

12. Verfahren nach einem der Ansprüche 2 bis 11, worin als perjodathaltiger Entschichter eine wässrige Natriummetaperjodatlösung vorliegt.

13. Verfahren nach einem der Ansprüche 2 bis 12, worin der perjodathaltige Entschichter zusätzlich ein anionaktives Tensid enthält.

14. Verfahren nach einem der Ansprüche 2 bis 13, worin nach der letzten Wasserspülung eine Laugenlösung eines sauerstoffhaltigen Lösungsmittels zur Entfernung von Phantombildern auf das Sieb aufgebracht wird.

15. Verfahren nach Anspruch 14, worin die Laugenlösung eines sauerstoffhaltigen Lösungsmittels aus einer Lösung von Natriumhydroxyd, wobei als sauerstoffhaltiges Lösungsmittel entweder Cyklohexanon oder Cellosolveacetat oder deren Gemische vorliegen, und einem Tensid besteht.

16. Verfahren nach Anspruch 15, worin Methylenchlorid der Laugenlösung zugesetzt wird.

17. Verfahren nach einem der Ansprüche 2 bis 16, worin nach einer Wartezeit und vor der ersten Wasserwäsche eine N-Methyl-2-pyrrolidon, ein sauerstoffhaltiges Lösungsmittel ein Tensid und als organisches Lösungsmittel eintweder Methylenchlorid, 1,1,1-Trichloräthan, Trichlordifluoräthan, Dimethylsulfoxyd oder Chloroform oder deren Gemisch enthaltende Zusammensetzung auf den dabei entstandenen Siebrückstand aufgesprüht wird.

18. Verwendung einer aus einem nichtwässrigen Gemisch von N-Methyl-2-pyrrolidon, einem sauerstoffhaltigen Lösungsmittel und einem Tenside bestehenden Zusammensetzung als Reinigungs- und/oder Rückgewinnungszusammensetzung zur Farbentfernung von einem Drucksieb.

19. Verwendung nach Anspruch 18, worin als sauerstoffhaltiges Lösungsmittel entweder Butylcellosolve, Cellosolveacetat oder Cyklohexanol oder deren Gemisch vorliegen.

20. Verwendung nach Anspruch 18 oder 19, worin als Tensid entweder ein nicht-ionogenes, anionenaktives oder amphoteres Tensid oder deren Gemisch vorliegt.

21. Verwendung nach einem der Ansprüche 18 bis 20, einschliesslich Methylenchlorid, 1,1,1-Trichloräthan, Dimethylsulfoxyd oder Trichlortrifluoräthan oder deren Gemischen als organisches Lösungsmittel.

22. Verwendung nach einem der Ansprüche 18 bis 21, worin das nichtwässrige Gemisch etwa 30 bis 85 Gew.-% N-Methyl-2-pyrrolidon, etwa 10 bis 35 Gew.-% sauerstoffhaltiges Lösungsmittel und etwa 1 bis 5 Gew.-% Tensid enthält.

23. Verwendung nach einem der Ansprüche 18 bis 22, einschliesslich eines in Wasser dispergierbaren Öls.

24. Verwendung nach Anspruch 23, worin als in Wasser dispergierbares Öl entweder Polyalkylenglycol, äthoxyliertes Lanolin oder äthoxyliertes Rizinusöl vorliegt.

**Revendications**

1. Procédé de nettoyage et ou de récupération d'un écran d'impression ayant un résidu d'encre sur sa

9

surface, caractérisé en ce qu'il comprend successivement le traitement, à une température sensiblement voisine de l'ambiante, du résidu d'encre d'impression à l'écran avec une composition liquide non aqueuse comprenant de la N-méthyl-2-pyrrolidone, un solvant oxygéné et un tensioactif, capable de se fixer sur la surface de l'encre pendant un temps suffisant pour dégrader le résidu d'encre, puis l'élimination par rinçage du résidue d'encre dégradé.

2. Procédé suivant la revendication 1, caractérisé en ce qu'après le rinçage, l'écran est mis en contact pendant un temps court avec un dissolvant d'émulsion contenant du périodate, l'écran étant ensuite rincé avec un courant d'eau pour éliminer l'image émulsionnée.

3. Procédé suivant l'une des revendications 1 ou 2, caractérisé en ce que l'écran d'impression porte une image imprimée et un résidu d'encre sur la surface de l'image, le résidu d'encre dégradée étant éliminé par rinçage avec un courant d'eau pressurisée, sans élimination de l'image imprimée.

4. Procédé suivant l'une des revendications précédentes, caractérisé en ce que le résidu d'encre d'impression à l'écran est traité par pulvérisation de la composition liquide.

5. Procédé suivant l'une des revendications précédentes, caractérisé en ce que le rinçage est effectue par pulvérisation d'eau dirigée ou par de l'eau préssurisée à bas volume.

6. Procédé suivant l'une des revendications précédentes, caractérisé en ce que le solvant oxygéné est soit du butylcellosolve, de l'acétate de cellulose ou de la cyclohexanone, soit un mélange de ces solvants.

7. Procédé suivant l'une des revendications précédentes, caractérisé en ce qu'après quelques heures de fixation, d'encre dégradée est traitée avec un concentré liquide de N-méthyl-2-pyrrolidone d'un solvant oxygéné, de chlorure de méthylène et d'un tensioactif, avant le rinçage.

8. Procédé suivant l'une des revendications précédentes, caractérisé en ce que le tensioactif est soit un tensioactif non ionique, anionique ou amphotère, soit un mélange de ces tensioactifs.

9. Procédé suivant l'une des revendications précédentes, caractérisé en ce que la composition liquide comprend au moins un mélange non aqueux d'environ en poids 30 à 85% de N-méthyl-2-pyrrolidone, de 10 à 35% de solvant oxygéné et de 1 à 5% de tensioactif.

10. Procédé suivant l'une des revendications précédentes, caractérisé en ce que la composition liquide comprend un huile dispersable dans l'eau.

11. Procédé suivant la revendication 10, caractérisé en ce que l'huile dispersable dans l'eau est un polyalcoylèneglycol, de la lanoline éthoxylée ou de l'huile de ricin éthoxylée.

12. Procédé suivant l'une des revendications 2 à 11, caractérisé en ce que le dissolvant d'émulsion contenant du périodate est une solution aqueuse de métaperiodate de sodium.

13. Procédé suivant l'une quelconque des revendications 2 à 12, caractérisé en ce que le dissolvant d'émulsion contenant du periodate comprend en outre un tensioactif anionique.

14. Procédé suivant l'une quelconque des revendications 2 à 13, caractérisé en ce qu'après le dernier rinçage à l'eau, l'on applique au solvant une solution caustique du solvant oxygéné pour éliminer les images secondaires.

15. Procédé suivant la revendication 14, caractérisé en ce que la solution caustique du solvant oxygéné comprend une solution d'hydroxyde de sodium, un solvant oxygéné qui est soit la cyclohexanone ou l'acétate de cellosolve, soit leurs mélanges, et un tensioactif.

16. Procédé suivant la revendication 15, caractérisé en ce que l'on ajoute du chlorure de méthylène à la solution caustique.

17. Procédé suivant l'une quelconque des revendications 2 à 16, caractérisé en ce qu'après la période de fixation et avant le premier rinçage à l'eau, l'on pulvérise sur le résidu d'écran résultant, une composition comprenant de la N-méthyl-2-pyrrolidone, un solvant oxygéné, un tensioactif et un solvant organique qui peut être soit le chlorure de méthylène, le trichlor-1,1,1 éthane, le trichlordifluoroéthane, le diméthylsulfoxyde ou le chloroforme, soit des mélanges de ces solvants.

18. Utilisation d'une composition caractérisée en ce qu'elle comprend un mélange non aqueux de N-méthyl-2-pyrrolidone, d'un solvant oxygéné et d'un tensioactif, comme composition de nettoyage et/ou de récupération pour éliminer l(es)' encre(s) d'un écran d'impression.

19. Utilisation suivant la revendication 18, caractérisée en ce que le solvant oxygéné est soit le butylcellosolve, l'acétate de cellosolve ou la cyclohéxanone, soit des mélanges de ces solvants.

20. Utilisation suivant l'une quelconque des revendications 18 ou 19, caractérisée en ce que le tensioactif est un tensioactif anionique ou amphotère ou un mélange de ces tensioactifs.

21. Utilisation suivant l'une quelconque des revendications 18 à 20, caractérisée en ce que l'on utilise un solvant organique qui est le chlorure de méthylène, le trichloro-1,1,1-éthane, le diméthylsulfoxyde ou le trichlorodifluoroéthane, ou des mélanges de ces solvants.

22. Utilisation suivant l'une quelconque des revendications 18 à 21, caractérisée en ce que le mélange non aqueux comprend environ en poids de 30 à 85% de N-méthyl-2-pyrrolidone, 10 à 35% de solvant oxygéné et 1 à 5% de tensioactif.

23. Utilisation suivant l'une des revendications 18 à 22, caractérisée en ce que l'on utilise une huile dispersable.

24. Utilisation suivant la revendication 23, caractérisée en ce que l'huile dispersable est un polyalcoylène glycol, de la lanoline èthoxylée ou de l'huile de ricin éthoxylée.